# FASCICULE DE BREVET EUROPEEN

(11) **EP 2 119 190 B1**
(45) Date de publication et mention de la délivrance du brevet: **12.09.2018**
(21) Numéro de dépôt: 08762002.7
(22) Date de dépôt: 29.01.2008
(51) Int. Cl.: H04L 29/06

(54) **GESTION DE CONTINUITÉ DE SERVICE DANS UN RÉSEAU**
DIENSTKONTINUITÄTSVERWALTUNG IN EINEM NETZ
SERVICE CONTINUITY MANAGEMENT IN A NETWORK

(30) Priorité: 06.02.2007 FR 0700831
(43) Date de publication de la demande: 18.11.2009
(73) Titulaire: Transpacific IP Group Limited, Grand Cayman KY1-1001 (KY)
(72) Inventeur: BOUCADAIR, Mohamed, F-14000 Caen (FR); NOISETTE, Yoann, F-14320 May Sur Orne (FR)
(74) Mandataire: Eidelsberg, Olivier Nathan
(86) Numéro de dépôt international: PCT/FR2008/050141
(87) Numéro de publication internationale: WO 2008/110714

(56) Documents cités:
- WO-A1-2006/073481
- US-A1- 2007 002 764
- US-A1- 2007 008 882
- US-B1- 6 973 027
- HARDWICK J: "Session Border Controllers - Enabling the VoIP Revolution" INTERNET CITATION, [Online] février 2005 (2005-02), XP002362943 Extrait de l'Internet: URL:http://www.dataconnection.com/network/ download/whitepapers/sessionbor dercontroller.pdf> [extrait le 2006-01-11]
- UZELAC SPEERMINT GLOBAL CROSSING A: "SIP Peering Use Case for VSPs; draft-uzelac-speermint-use-cases-00.txt", 20061016, 16 October 2006 (2006-10-16), XP015050513, ISSN: 0000-0004
- "Interconnect and routeing issues related to NN&A for NGNs TISPAN", ETSI DRAFT; 11BTD218 INTERCONNECTION_DRAFT_V10, EUROPEAN TELECOMMUNICATIONS STANDARDS INSTITUTE (ETSI), 650, ROUTE DES LUCIOLES ; F-06921 SOPHIA-ANTIPOLIS ; FRANCE, 6 September 2006 (2006-09-06), pages 1-34, XP014056409,
- SMOOT CARL-MITCHELL TEXAS INTERNET CONSULTING JOHN S QUARTERMAN TEXAS INTERNET CONSULTING: "Using ARP to Implement Transparent Subnet Gateways; rfc1027.txt", NETWORK WORKING GROUP RFC 1717, INTERNET SOCIETY (ISOC) 4, RUE DES FALAISES CH- 1205 GENEVA, SWITZERLAND, CH, 1 October 1987 (1987-10-01), XP015005965, ISSN: 0000-0003

## Description

La présente invention se rapporte à un service sur IP (pour 'Internet Protocol'), notamment à la téléphonie sur IP dite « Voix sur IP » (pour « Voice over IP » en anglais).

La téléphonie sur IP permet avantageusement, d'une part, une réduction du coût des communications téléphoniques par rapport à la téléphonie classique, et d'autre part, le couplage de la téléphonie avec les fonctions et services de l'informatique et des réseaux IP.

Or, un service de téléphonie est un service temps réel qui requiert un niveau de disponibilité, de robustesse et de résistance aux pannes relativement élevé. Dans le contexte de la téléphonie classique (RTC pour 'Réseau Téléphonique Commuté'), basée sur une commutation circuit, ce niveau de robustesse et de disponibilité est obtenu par la mise en oeuvre de méthodes qui ne sont pas applicables à la téléphonie sur IP, qui, elle, ne se base pas sur une commutation circuit.

Un réseau IP offrant un service de téléphonie comprend classiquement une plateforme de service, ainsi que des équipements d'accès au service, ou encore POP (pour 'Point Of Presence' en anglais), qui sont en charge de gérer l'accès des terminaux clients utilisateurs au service considéré.

Classiquement, à ces POP sont associés des équipements de gestion de session en bordure (en anglais 'Border Session Controller' ou BSC, ou encore Session Border Controller ou SBC), dont les principales fonctions ont été identifiées dans le document 'Requirements from Session Initiation Protocol Session Border Control Deployments', de Camarillo et al., draft-ietf-sipping-sbc-funcs, Novembre 2006. Ces SBC sont situés entre les terminaux clients et les plateformes du service de téléphonie IP. Un SBC est en général situé dans un POP d'accès du réseau IP (sans que cela soit pour autant une condition nécessaire pour le fonctionnement du service de téléphonie) et représente, pour un terminal client donné, un point d'entrée unique au service de téléphonie. Une telle gestion de l'accès à un service permet de masquer, aux terminaux clients, la plateforme de service et, de manière plus générale, l'architecture du réseau mise en oeuvre par un opérateur. Il est alors possible de garantir une étanchéité de service.

Les SBC correspondent à un point de passage à la fois pour les flux de signalisation, visant à établir une communication, et pour les flux média qui transitent entre les terminaux clients. Les flux de signalisation peuvent viser l'établissement d'une communication, par exemple sur la base de protocoles tels que SIP (pour 'Session Initiation Protocol'), ou encore H.323, tel que défini par l'ITU-T (pour 'International Telecommunication Union Télécommunication Standardization Section'), ou bien IAX (pour 'Inter-Asterisk eXchange Version 2') tel que défini dans le document draft-guy-iax-02, Work In Progress, Octobre 2006 de Spencer, Shumard, Capouch et Guy. Les flux média, quant à eux, peuvent être échangés entre terminaux clients selon des protocoles de type RTP (pour 'Real-Time Transport Protocol' en anglais) ou encore de type IAX par exemple.

Un SBC reçoit alors, d'une part, des messages de signalisation depuis la plateforme de service, ou respectivement depuis les terminaux clients. Puis, après traitement de ces messages, le SBC les relaie vers les terminaux clients finaux, ou respectivement vers la plateforme de service.

Ensuite, lorsqu'un flux média est échangé depuis un premier terminal client vers un second terminal client utilisé par un client du service, qui sont respectivement associés à un premier et un second SBC, ce flux média est reçu au niveau du premier SBC, puis relayé vers le second SBC, ce dernier étant alors en charge de transmettre ce flux média à destination du second terminal client. En procédant ainsi, les terminaux clients ne peuvent pas communiquer directement entre eux, l'étanchéité de service étant ainsi garantie.

On peut également noter que les SBC peuvent également assurer d'autres fonctions telles qu'une fonction de filtrage ou bien encore une fonction de translation d'adresses pour des offres reposant sur le protocole IPv4 (version 4).

Lorsqu'un SBC ne peut plus communiquer avec la plateforme, le service offert aux clients de terminaux clients qu'il gère est coupé. Afin d'augmenter la résistance aux pannes dans un tel réseau, et de transporter de manière efficace et robuste les messages de signalisation permettant l'établissement des communications ainsi que le transport des flux média entre les terminaux clients, on peut prévoir de mettre en place une redondance des éléments de la plateforme de service sous la forme d'éléments de secours (ou 'backup' en anglais), de telle sorte que l'on puisse substituer un élément de secours à un élément défectueux de la plateforme de service. Une telle architecture requiert qu'un tel élément de secours présente une configuration et un comportement identiques à l'élément défectueux auquel il doit se substituer.

Toutefois, la mise en place de tels équipements de secours pour la plateforme de service présente de nombreux désavantages. Tout d'abord, la duplication de ces éléments est coûteuse tant au niveau de l'infrastructure à mettre en place qu'au niveau de la gestion de la redondance en elle-même.

En outre, une telle redondance ne permet pas de pallier, en toutes circonstances, les conséquences d'une panne relative aux liens entre la plateforme de service et les SBCs.

Le document US 6,973,027 décrit une gestion de communication d'un terminal dans un réseau. Le terminal est relié à un proxy qui lui-même est relié à un portier (ou 'gatekeeper' en anglais) qui peut être considéré comme une plateforme de service.

La présente invention vient améliorer la situation.

Un premier aspect de la présente invention propose un procédé de gestion d'un service offert à un utilisateur d'un terminal dans un réseau comprenant une plateforme de service et des équipements incluant des contrôleurs de session en bordure, chacun des contrôleurs de session de bordure étant adapté pour communiquer avec la plateforme de service. Au moins un contrôleur de session en bordure donné est adapté pour router des messages reçus depuis le terminal à destination de la plateforme de service.

Le procédé comprend les étapes suivantes au niveau du contrôleur de session en bordure:
/a/ décider que la plateforme de service n'est pas accessible sur la base d'un contrôle d'accessibilité ; et
/b/ opérer dans un mode de fonctionnement autonome dans lequel le contrôleur de session en bordure donné sélectionne un équipement du réseau distinct de la plateforme de service et route au moins un message reçu depuis le terminal vers ledit équipement du réseau sélectionné.

En procédant ainsi, on est en mesure de garantir une continuité du service offert au l'utilisateur du terminal, même dans le cas où le contrôleur de session en bordure, qui est en charge de gérer le terminal considéré, a perdu l'accès à la plateforme de service. Dans ce cas, au lieu de router de manière automatique les messages reçus depuis le terminal, vers la plateforme de service, il sélectionne un autre équipement du réseau pour continuer de fournir le service à l'utilisateur de ce terminal.

L'équipement de réseau sélectionné peut avantageusement être un contrôleur de session en bordure ayant accès à la plateforme de service. Ainsi, dans ce cas, le message routé vers ledit équipement de réseau sélectionné est transmis depuis l'équipement de réseau sélectionné vers la plateforme de service.

L'équipement de réseau sélectionné peut alors jouer le rôle d'un contrôleur de session en bordure mandataire et relayer ainsi les messages qui sont normalement transmis depuis le contrôleur de session en bordure donné vers la plateforme de service.

Dans un mode de réalisation de la présente invention, chaque contrôleur de session en bordure met en oeuvre le contrôle d'accessibilité à la plateforme, et, à l'étape /b/, les étapes suivantes sont effectuées :
/b-1/ émettre une requête de mandataire à destination d'au moins un autre contrôleur de session en bordure du réseau ;
/b-2/ si au moins une réponse à ladite requête de mandataire est reçue, sélectionner, en tant que mandataire, un contrôleur de session en bordure parmi les contrôleurs de session en bordure ayant émis une réponse.

Ainsi, pour sélectionner un contrôleur de session en bordure en tant que mandataire, le contrôleur de session en bordure donné interroge tout ou partie des autres contrôleurs de session en bordure du réseau. On entend par le terme 'réseau' non seulement la couche réseau, c'est-à-dire la couche 3, du modèle OSI (pour 'Open System Interconnection' en anglais), mais aussi toute interconnexion entre différents équipements.

Ces contrôleurs de session en bordure répondent si la plateforme de service leur apparaît comme accessible sur la base du contrôle d'accessibilité qu'ils mettent en oeuvre. Puis, le contrôleur de session en bordure peut alors sélectionner un mandataire parmi les contrôleurs de session en bordure qui ont répondu, c'est-à-dire parmi les contrôleurs de session en bordure qui ont été interrogés et qui ont accès à la plateforme de service.

Dans un mode de réalisation de la présente invention, à l'étape /b/, le contrôleur de session en bordure reçoit un message du terminal à destination d'un terminal destinataire, et l'équipement de réseau sélectionné est un contrôleur de session en bordure ayant en charge de gérer ledit terminal destinataire. Les messages routés vers ledit équipement de réseau sélectionné sont alors transmis depuis l'équipement de réseau sélectionné vers le terminal destinataire.

Dans ce contexte, un message reçu depuis le terminal par le contrôleur de session donné transite par un autre contrôleur de session en bordure qui est celui sélectionné, puis est acheminé vers le terminal destinataire, sans passer par la plateforme de service. Un tel mode de réalisation peut notamment être avantageux dans le cas où les autres contrôleurs de session en bordure du réseau n'ont pas non plus accès à la plateforme de service.

Dans ce cas, chaque contrôleur de session en bordure maintient une base de données locale indiquant des terminaux que ledit contrôleur de session en bordure gère, et l'étape /b/ est effectuée selon les étapes suivantes, au niveau du contrôleur de session en bordure donné :
/b-i/ émettre un message de requête de destinataire à destination d'au moins un autre contrôleur de session en bordure ;
/b-ii/ si une réponse à la requête de destinataire est reçue, sélectionner le contrôleur de session en bordure ayant émis ladite réponse ;
un contrôleur de session en bordure décidant d'émettre une réponse à la requête de destinataire en fonction de la base de données locale.

Ainsi, comme chaque contrôleur de session en bordure connaît de manière locale les terminaux qu'il a la charge de gérer, en fonction des indications stockées dans sa base de données locale, un message reçu depuis le terminal peut ne pas transiter via la plateforme de service.

Dans une variante, on prévoit de combiner les modes de fonctionnement autonomes ci-avant.

A cet effet, on peut prévoir que, si au moins un contrôleur de session en bordure a accès à la plateforme de service, l'équipement de réseau sélectionné est un contrôleur de session en bordure ayant accès à la plateforme de service, le message routé vers ledit équipement de réseau sélectionné étant transmis depuis l'équipement de réseau sélectionné vers la plateforme de service ; et que, sinon, l'équipement de réseau sélectionné est un équipement en charge de gérer le terminal destinataire, le message routé vers ledit équipement de réseau sélectionné étant transmis depuis l'équipement de réseau sélectionné vers le terminal destinataire.

Cette alternative est avantageuse car elle permet de privilégier le mode de fonctionnement autonome, par mandataire, dans lequel le service reste rendu par la plateforme de service et de ce fait est identique à celui qui est fourni lors d'un fonctionnement normal du contrôleur de session en bordure.

Un tel équipement en charge de gérer le terminal destinataire peut être un contrôleur de session en bordure.

Cet équipement peut également être une passerelle de service reliant le réseau à un autre réseau. Dans ce cas, le contrôleur de session en bordure donné peut disposer d'informations relatives à cette passerelle de service. A l'étape /b/, quand le contrôleur de session en bordure reçoit un message du terminal à destination d'un terminal destinataire, ledit équipement de réseau sélectionné est la passerelle de service lorsque le terminal destinataire est géré par ledit autre réseau.

Ainsi, on peut même assurer une continuité du service pour un utilisateur d'un terminal qui cherche à communiquer avec un terminal destinataire géré dans un réseau différent de celui par lequel le terminal considéré est géré.

Ici, le terme 'réseau' peut faire référence à un domaine de service, ce dernier pouvant notamment correspondre à une offre de téléphonie. Ainsi, la passerelle permet alors de relier deux domaines de service différents qui peuvent correspondre à deux offres de service différentes respectivement.

Le procédé de gestion selon un mode de réalisation de la présente invention peut, en outre, prévoir la mise en oeuvre des étapes suivantes :
- recevoir une requête de mandataire ;
- si la plateforme est détectée comme accessible, émettre une réponse à la requête de mandataire.

Ainsi le contrôleur de session en bordure peut également être un contrôleur mandataire.

Le procédé peut également comprendre la mise en oeuvre des étapes suivantes :
- recevoir une requête de destinataire indiquant un terminal destinataire ;
- déterminer si ledit contrôleur de session est en charge de gérer le terminal destinataire en fonction d'informations stockées dans la base de données local ;
- et dans l'affirmative, émettre une réponse à la requête de destinataire ;
le contrôleur de session en bordure étant adapté pour transmettre, à destination du terminal destinataire, des messages reçus depuis un autre contrôleur de session en bordure.

Ici, on peut prévoir que la requête de destinataire indique le terminal destinataire par un identifiant de téléphonie correspondant.

Ainsi le contrôleur de session en bordure peut également jouer un rôle de contrôleur destinataire.

On peut prévoir de mettre en oeuvre un contrôle d'accessibilité selon les étapes suivantes :
/1/ émettre un message de contrôle à destination de la plateforme de service et déclencher un temporisateur ;
/2/ contrôler si une réponse au message de contrôle est reçue depuis la plateforme de service avant expiration dudit temporisateur ;
/3/ répéter les étapes /1/ et /2/ N fois, N étant un nombre entier prédéterminé;
/4/ si aucune réponse n'est reçue avant expiration du temporisateur pour les N fois, décider que la plateforme de service n'est pas accessible.

Un deuxième aspect de la présente invention propose un contrôleur de session en bordure adapté pour mettre en oeuvre un procédé de gestion selon le premier aspect de la présente invention.

Ce contrôleur de session en bordure peut être adapté pour transmettre des messages reçus depuis le terminal à destination de la plateforme de service et peut comprendre :
- une unité de contrôle adaptée pour décider que la plateforme de service n'est pas accessible sur la base d'un contrôle d'accessibilité ; et
- une unité de gestion de mode de fonctionnement adaptée pour basculer dans un mode de fonctionnement autonome, en fonction d'une décision prise par l'unité de contrôle, dans lequel le contrôleur de session en bordure sélectionne un équipement du réseau distinct de la plateforme et route au moins un message reçu depuis le terminal vers ledit équipement du réseau sélectionné.

Un troisième aspect de la présente invention propose une plateforme de service dans un réseau offrant un service à un utilisateur d'un terminal, ledit réseau comprenant en outre des contrôleurs de session en bordure, chacun étant adapté pour communiquer avec la plateforme de service,
ladite plateforme de service étant adaptée pour répondre à un message de contrôle d'accessibilité reçu depuis un contrôleur de session en bordure.

Un quatrième aspect de la présente invention propose une passerelle de service dans un premier réseau offrant un service à un utilisateur d'un terminal et dans un second réseau, ledit premier réseau comprenant en outre des contrôleurs de session en bordure, chacun étant adapté pour communiquer avec la plateforme de service, ladite passerelle de service étant adaptée pour ;
- recevoir une requête de destinataire indiquant un terminal destinataire ; et
- répondre à ladite requête de destinataire si le terminal destinataire est géré dans ledit second réseau.

Un cinquième aspect de la présente invention propose un programme d'ordinateur destiné à être installé dans un contrôleur de session selon le deuxième aspect de la présente invention, comprenant des instructions aptes à mettre en oeuvre le procédé selon le premier aspect de la présente invention, lors d'une exécution du programme par des moyens de traitement du contrôleur de session.

Un sixième aspect de la présente invention propose un support d'enregistrement lisible par un ordinateur sur lequel est enregistré le programme d'ordinateur selon le cinquième aspect.

Un septième aspect de la présente invention propose un programme d'ordinateur destiné à être installé dans une plateforme de service selon le troisième aspect de la présente invention, comprenant des instructions aptes à mettre en oeuvre le procédé selon le premier aspect, lors d'une exécution du programme par des moyens de traitement de la plateforme de service.

Un huitième aspect de la présente invention propose un support d'enregistrement lisible par un ordinateur sur lequel est enregistré le programme d'ordinateur selon le septième aspect.

L'invention sera également mieux comprise à l'aide des dessins, sur lesquels :
- la figure 1 illustre un réseau composé par des éléments de service de téléphonie IP selon un mode de réalisation de la présente invention ;
- la figure 2 illustre une gestion d'une inaccessibilité de la plateforme de service depuis un contrôleur de session en bordure selon un mode de réalisation de la présente invention ;
- la figure 3 illustre une gestion d'un basculement entre différents modes de fonctionnement d'un contrôleur de session en bordure selon un mode de réalisation de la présente invention ;
- la figure 4 illustre une gestion d'initiation d'appel dans un mode de fonctionnement autonome dit 'local'.

Afin de garantir une continuité de service même lorsque les échanges entre un SBC et la plateforme de service ne sont plus possibles, et ce quel que soit l'origine du problème affectant ces échanges, il est prévu qu'un SBC puisse opérer soit dans un mode de fonctionnement normal, qui correspond au cas où la plateforme de service est accessible pour lui et dans lequel les messages entre deux terminaux transitent via la plateforme de service, soit dans un mode de fonctionnement autonome, qui correspond au cas où la plateforme de service n'est pas accessible pour lui.

Dans le cas où la plateforme de service est accessible depuis ce SBC, les messages reçus depuis les terminaux clients sont relayés vers la plateforme de service qui, elle, a en charge de mettre en oeuvre le routage téléphonique de ces messages.

On entend par les termes 'mode de fonctionnement autonome', un mode de fonctionnement du SBC dans lequel le routage des messages reçus depuis ses terminaux clients est mis en oeuvre au niveau du SBC lui-même et non pas au niveau de la plateforme de service.

Le basculement d'un mode de fonctionnement normal vers un mode de fonctionnement autonome est effectué en fonction de l'état d'accessibilité de la plateforme pour le SBC considéré. A cet effet, il est prévu qu'un SBC dispose de moyens de contrôle de son état d'accessibilité à la plateforme.

Lorsque l'accès de ce SBC à la plateforme de service est détecté comme étant défaillant, le SBC bascule alors dans un mode de fonctionnement autonome. Puis, lorsque la plateforme de service est à nouveau détectée comme accessible, le SBC peut revenir dans un mode de fonctionnement normal.

Un SBC peut contrôler l'état d'accessibilité de la plateforme de service en émettant un message de contrôle de type « keepalive ». Un tel message peut être émis à une fréquence déterminée. Aucune limitation n'est attachée à la méthode d'envoi de ces messages de contrôle, ni à la fréquence à laquelle ils sont envoyés.

Le SBC gère alors de préférence un temporisateur lié à l'attente d'une réponse depuis cette plateforme de service.

Lorsque le SBC est en mode de fonctionnement normal, le temporisateur peut être déclenché à l'émission d'un message de contrôle. Puis, lorsque le temporisateur expire avant qu'une réponse ne soit reçue depuis la plateforme de service, le SBC peut décider de basculer dans le mode de fonctionnement autonome.

On peut également prévoir que le basculement dans le mode de fonctionnement autonome ne soit déclenché que lorsqu'un nombre entier N de messages de contrôle sont envoyés successivement à la plateforme de service sans que cette dernière ne réponde avant l'expiration du temporisateur associé. Ce nombre N peut alors être déterminé en fonction de la fréquence à laquelle sont envoyés les messages de contrôle successifs.

Une plateforme de service de ce type comprend différents éléments fonctionnels. Un tel message de contrôle peut être reçu par ces différents éléments fonctionnels de la plateforme de service, et tout ou partie de ces éléments fonctionnels sont alors susceptibles de répondre aux messages de contrôle du SBC.

L'état d'accessibilité de ces éléments peut être déterminé par exemple sur la base de traces de types SNMP (pour 'Simple Network Management Protocol') ou sur la base d'alarmes et notifications issus des éléments fonctionnels de la plateforme de service. La méthode mise en oeuvre pour déterminer l'état d'accessibilité de la plateforme de service n'est pas décrite en détail ici, et aucune limitation n'y est attachée.

Lorsque le SBC est en mode de fonctionnement autonome, il peut être avantageux de mettre en oeuvre une méthode de détection d'accessibilité à la plateforme de service également, afin d'être en mesure de gérer le basculement dans le mode de fonctionnement normal dans le cas où la plateforme serait à nouveau détectée comme accessible.

A cet effet, la même méthode de détection d'accessibilité peut être mise en oeuvre à la fois dans le cas où le SBC est en mode de fonctionnement normal et dans le cas où le SBC est en mode de fonctionnement autonome.

Ainsi, dans le cas où le SBC opère en mode de fonctionnement autonome, un temporisateur peut être déclenché à l'émission d'un message de contrôle. Puis, lorsqu'une réponse est reçue depuis la plateforme de service avant que le temporisateur expire, le SBC peut décider de basculer dans le mode de fonctionnement normal.

De la même manière que pour la détection de la perte de l'accès à la plateforme telle que décrite ci-avant, le rétablissement peut être considéré effectif seulement après une ou plusieurs réponses aux messages de contrôle envoyés successivement, chacune étant reçue avant l'expiration du temporisateur associé. Lorsque l'accès à la plateforme de service est rétabli, le SBC bascule alors dans le mode de fonctionnement normal.

Il convient toutefois, pour garantir un certain niveau de qualité pour le service offert, de s'assurer que ce basculement dans le mode de fonctionnement normal se fasse en douceur et sans rupture.

Il peut donc être avantageux que le SBC continue de gérer les sessions qui ont été établies dans le mode de fonctionnement autonome du SBC et qui sont toujours en cours au moment où le SBC bascule dans le mode de fonctionnement normal, jusqu'à ce que ces sessions soient terminées.

Le contrôle d'accessibilité est réalisé au niveau du SBC considéré et ne signifie pas que la plateforme de service en elle-même n'est plus opérationnelle, même si cela peut être l'origine d'une perte d'accès à la plateforme de service pour ce SBC.

Le mode de fonctionnement autonome d'un SBC implique que ce dernier n'achemine plus de manière automatique, comme dans le mode de fonctionnement normal, les messages reçus depuis un terminal client vers la plateforme de service. Le routage de ces messages est alors géré au niveau du SBC qui fonctionne en mode autonome.

Dans un mode autonome, il peut être prévu que le SBC considéré cherche à transmettre tout de même les messages reçus depuis un terminal client vers la plateforme de service par l'intermédiaire d'un autre SBC du réseau qui, lui, a accès à la plateforme de service. En effet, il est possible que la plateforme de service ne soit détectée comme inaccessible que par un ou une partie des SBC du réseau, et que pour d'autres, elle reste accessible. Tel peut être le cas lorsque les états d'inaccessibilités détectés reposent sur des problèmes de connexions réseau localisées.

Dans ces conditions, on peut prévoir que le SBC cherche à élire un SBC mandataire parmi ceux qui ont accès à la plateforme de service, par l'intermédiaire duquel il pourrait alors accéder à cette plateforme de service.

Ainsi, un mode de réalisation de la présente invention propose un mode de fonctionnement collaboratif. A cet effet, on prévoit que les SBC peuvent communiquer entre eux sur la base d'un protocole, qui peut être un protocole dédié, notamment par des échanges de type point-multipoint ou de type 'anycast', c'est-à-dire lorsque plusieurs SBC ont une même adresse, le SBC le plus proche de la source émettrice de trafic à destination de cette adresse recevant ce trafic.

Aucune limitation n'est attachée à la présente invention au regard du mode de communication inter SBC utilisé.

Par la suite, à titre d'exemple, la présente invention est décrite dans son application à un protocole inter SBC basé sur un mode de diffusion générale, ou en anglais 'multicast'. Ainsi, les échanges inter SBC sont alors réalisés sur la base de groupes à plusieurs destinataires, un groupe pouvant potentiellement contenir tous les SBC du réseau considéré. Dans ces conditions, un message envoyé à ce groupe est alors reçu par tous les SBC.

Par exemple, on peut prévoir que, au démarrage, l'ensemble des SBC du réseau, qui peut être un réseau téléphonique, appartient à un groupe multicast donné G identifié par une adresse IP spécifique.

Puis, sur détection de l'inaccessibilité de la plateforme de service pour un SBC, ce dernier envoie une requête de mandataire, un message de type SBC_PROXY, à destination de l'adresse IP spécifique du groupe multicast G, afin de déterminer si au moins un SBC du groupe arrive à joindre la plateforme de service.

Sur réception de ce message de recherche de mandataire, les SBC de ce groupe informent donc le SBC émetteur de ce message, au sujet de leur état d'accessibilité à la plateforme de service.

Aucune limitation n'est attachée à la présente invention au regard du mécanisme mis en oeuvre pour transmettre une information relative à un état d'accessibilité de la plateforme de service depuis un SBC à un autre SBC.

On peut notamment prévoir à cet effet qu'un SBC ne répond à ce message de recherche de mandataire que s'il a accès à la plateforme de service et que, de ce fait, l'absence de réponse signifie que cet accès est impossible. Dans ces conditions, le SBC émetteur du message de requête peut armer un temporisateur. Puis, lorsque le temporisateur expire avant qu'une réponse n'ait été reçue, le SBC émetteur en conclut qu'aucun des SBC destinataires ne peut être un SBC mandataire.

Lorsqu'un SBC du groupe G a détecté la plateforme de service comme accessible, il émet alors une réponse à destination du SBC émetteur. Cette réponse peut être émise en mode unicast par un message de type 'ACKNOWLEDGE'.

Dans le cas où une ou plusieurs réponses ont été reçues, le SBC émetteur peut disposer d'un SBC mandataire. Si plusieurs SBC du groupe G ont répondu, il peut même en sélectionner un en fonction de critères de sélection, aucune limitation n'étant attachée à la présente invention au regard de tels critères de sélection.

Un SBC mandataire a en charge de relayer les messages qui transitent par le SBC émetteur à destination de la plateforme de service, cette dernière pouvant alors traiter ces messages comme s'ils lui parvenaient depuis le SBC émetteur.

Dans le cas où, à l'expiration du temporisateur, aucune réponse n'a été reçue, ou encore dans le cas où un nombre déterminé N de messages de recherche de mandataire, envoyés successivement, sont restés sans réponse, le SBC ne peut alors pas disposer d'un SBC mandataire.

Dans un mode de réalisation, la plateforme de service peut elle aussi être notifiée de cette configuration, en particulier pour des besoins de cohérence de service ou de sécurité. Néanmoins, cette notification est optionnelle.

Dans un tel cas, on peut avantageusement prévoir que le SBC émetteur bascule alors dans un mode de fonctionnement local dans lequel il se substitue à la plateforme de service pour au moins une partie des fonctions que cette dernière assure pour les terminaux clients qui sont rattachés au SBC considéré.

A cet effet, afin de permettre à un SBC de mettre en oeuvre au moins certaines fonctionnalités de la plateforme de service, c'est-à-dire afin qu'un SBC ait la capacité d'opérer dans un mode de fonctionnement local les terminaux clients dont l'accès est géré par le POP auquel il est rattaché, ce SBC peut disposer d'une base de données dans laquelle sont également stockées au moins une partie des données d'enregistrement relatives à ces terminaux clients.

Un terminal client procède à une phase d'enregistrement au cours de laquelle il émet à destination du réseau, c'est-à-dire à destination du SBC qui est chargé de sa gestion, un message d'enregistrement contenant des données d'enregistrement qui permettent au réseau de fournir le service considéré. Dans un mode de fonctionnement normal, ce message est reçu au niveau du SBC attaché au POP gérant l'accès au service, qui peut être un service de téléphonie, de l'utilisateur du terminal client. Ce SBC relaie ce message à destination de la plateforme de service qui maintient à jour une base de données stockant ces données d'enregistrement.

Ainsi, comme un tel message d'enregistrement transite par le SBC, de par sa fonction dans l'architecture du réseau considéré, la base de données locale peut avantageusement être mise à jour de manière aisée.

Dans de telles conditions, sur la base des données ainsi stockées, le SBC peut se substituer au moins en partie à la plateforme de service pour les terminaux clients dont il a la charge, puisqu'il dispose de données d'enregistrement qui lui permettent notamment de contacter ces terminaux clients. Le SBC peut alors notamment répondre aux requêtes d'établissement d'appel à destination des terminaux clients dont il a la charge.

En outre, ces informations d'enregistrement sont à jour, puisqu'elles sont extraites au niveau des échanges qui sont classiquement effectués entre la plateforme de service et les terminaux clients.

Il convient de noter que lorsque le dernier enregistrement des terminaux clients a eu lieu avant le basculement en mode de fonctionnement local, il n'est pas aisé de garantir que les données d'enregistrement stockées dans la base de données de la plateforme de service soient des données à jour au moment où cette dernière est à nouveau accessible pour le SBC.

De plus, les terminaux clients qui se sont enregistrés pendant la période où le SBC opère en mode de fonctionnement local ne sont pas connus de la plateforme de service.

Par conséquent, lorsque la plateforme de service est à nouveau détectée comme étant accessible depuis le SBC considéré, ce dernier réémet à destination de la plateforme de service l'ensemble des requêtes d'enregistrement pour l'ensemble des terminaux clients qui sont gérés dans le mode de fonctionnement local.

Un tel mode de réalisation permet de garantir que la plateforme de service dispose de données d'enregistrement à jour pour les terminaux clients qui ont émis de telles requêtes d'enregistrement.

Puis, toute session ou communication qui est initiée après le basculement dans le mode de fonctionnement local est traitée de manière classique, et de ce fait la base de données de la plateforme de service est mise à jour correctement par la suite.

Un mode de fonctionnement autonome peut donc correspondre soit au mode de fonctionnement collaboratif, soit encore au mode de fonctionnement local.

On peut également prévoir que, lorsque le SBC bascule depuis un mode de fonctionnement normal vers un mode de fonctionnement autonome, il tente tout d'abord de basculer dans un mode de fonctionnement collaboratif dans lequel il accède à la plateforme de service via un SBC mandataire, puis, dans le cas où ce mode de fonctionnement collaboratif n'est pas possible, le SBC bascule alors dans le mode de fonctionnement local. Tel peut être le cas notamment lorsque la plateforme de service n'est pas opérationnelle ou encore lorsque le SBC considéré ne peut échanger d'information avec les autres SBC du réseau.

Il est alors préférable que tout ou partie des SBC maintiennent à jour des bases de données locales respectives pour anticiper un éventuel basculement dans un mode de fonctionnement local.

Dans une variante, on peut prévoir que le SBC bascule dans le mode de fonctionnement local dès qu'une perte d'accessibilité à la plateforme est détectée, sans chercher à sélectionner un SBC mandataire.

On peut également prévoir que le SBC ne peut basculer que dans un mode de fonctionnement collaboratif, et dans ce cas, la gestion d'une base de données locale au SBC n'est pas requise.

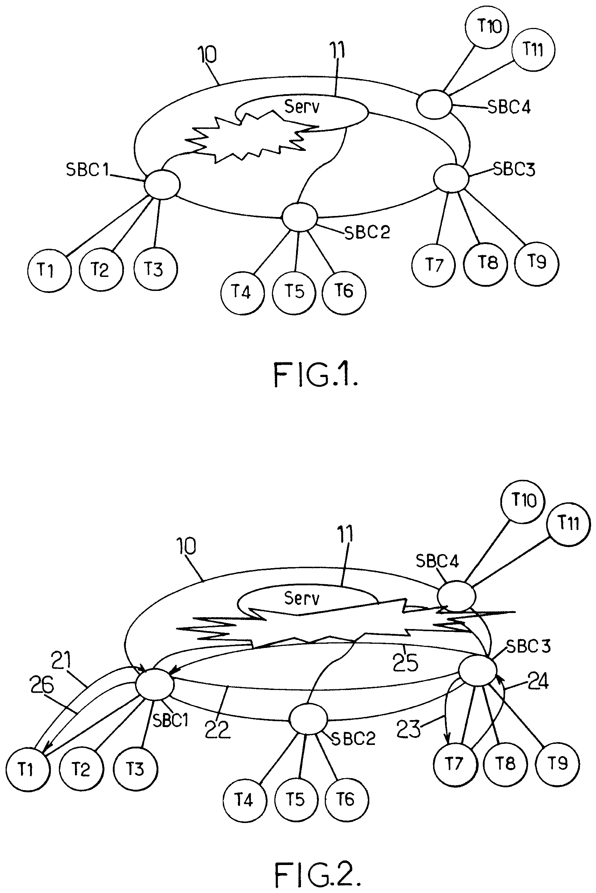

La figure 1 illustre un réseau selon un mode de réalisation de la présente invention. Ce réseau 10 comprend quatre SBC, SBC1, SBC2, SBC3 et SBC4, qui sont adaptés pour communiquer avec une plateforme de service Serv 11. Le SBC 1 a la charge de gérer les terminaux clients T1 à T3, le SBC 2 les terminaux clients T4 à T6, le SBC 3 les terminaux clients T7 à T9, et le SBC 4 les terminaux clients T10 et T11.

Le SBC1 détecte que la plateforme de service n'est pas accessible. Il cherche à basculer dans le mode de fonctionnement autonome qui est en priorité le mode de fonctionnement collaboratif. A cet effet, il envoie une requête de mandataire SBC_PROXY en mode de diffusion au groupe de SBCs comprenant le SBC2, le SBC3 et le SBC4.

Ces SBC2, SBC3, et SBC4 répondent à ce message SBC_PROXY par l'émission de messages de type 'ACKNOWLEDGE' à destination du SBC1 de sorte à l'informer que, de leur point de vue, la plateforme de service est accessible et opérationnelle.

Le SBC1 peut alors choisir parmi le groupe des SBC2, SBC3 et SBC4 un SBC en tant que SBC Proxy (ou mandataire). Si le SBC3 est sélectionné en tant que SBC mandataire du SBC1, tous les messages de signalisation reçus par le SBC1 sont transmis au SBC3, ce dernier les transmettant à son tour à la plateforme de service 11.

Si aucun SBC ne répond au message SBC_PROXY, le SBC1 opère alors en mode de fonctionnement local.

Dans le mode de fonctionnement local, sur réception d'une requête d'établissement d'appel, comme un message de type 'INVITE' selon le protocole SIP (pour 'Session Initiation Protocol'), le SBC cherche à faire aboutir l'appel sans avoir recours à la plateforme de service.

A cet effet, il envoie une requête de destinataire à destination de tout ou partie des SBC du réseau dans le but de déterminer quel SBC est en charge du terminal client destinataire du message de signalisation reçu. Aucune limitation n'est attachée au protocole utilisé pour émettre une telle requête de destinataire.

Dans un premier cas, le terminal client destinataire du message d'initiation d'appel est géré par le SBC qui a reçu la requête d'initialisation d'appel et qui opère donc dans le mode de fonctionnement local. Dans ce cas, le traitement de la requête est effectué au niveau de ce SBC, qui assure donc ici des fonctions de routage d'appel.

A cet effet, ce SBC peut vérifier que des données relatives à ce client destinataire sont stockées dans sa base de données locale, soit avant l'envoi de la requête de destinataire, soit de manière parallèle à l'envoi de cette requête aux SBC.

On peut aussi prévoir que le SBC envoie une requête de destinataire au groupe de SBC dont il fait partie, et que de ce fait, il reçoit cette requête et la traite comme les autres SBC, en y répondant favorablement dans le cas où le terminal client destinataire est à la charge de ce SBC.

Dans un second cas, un SBC autre que celui qui reçoit la requête d'établissement d'appel, gère le terminal client destinataire de cette requête, cet autre SBC, sur réception de la requête de destinataire, vérifie s'il est en charge du terminal client destinataire sur la base des données stockées dans sa base de données locale. Si ce n'est pas le cas, ce SBC n'émet de préférence aucune réponse négative, l'absence de réponse traduisant cette information.

Dans le cas où cet autre SBC a la charge de ce terminal client destinataire, ce dernier répond alors au SBC émetteur de la requête de destinataire. Il doit notamment fournir en réponse des informations qui permettent au SBC émetteur de lui transmettre la requête d'initiation d'appel reçue depuis son terminal client.

Cet autre SBC se comporte alors comme un noeud de la plateforme de service dédié au routage d'appel.

Sur réception de la réponse à sa requête de destinataire, le SBC transmet alors la requête d'initiation d'appel reçue au SBC destinataire. Puis, le traitement de l'appel peut être géré sur la base du fait que les messages échangés entre les terminaux transitent entre les deux SBC.

Dans un troisième cas, le terminal client destinataire n'est connu d'aucun des SBC ayant reçu la requête de SBC destinataire. Tel peut être le cas, lorsque le terminal client destinataire appartient à un autre domaine IP. Dans ce cas, le message de requête d'initiation d'appel peut alors être acheminé vers une passerelle de signalisation permettant d'accéder à un service distant.

On peut alors prévoir que les informations relatives à une telle passerelle de signalisation sont configurées au niveau de chaque SBC. A cet effet, il est possible d'utiliser des adresses FQDN (pour 'Fully Qualified Domain Name' en anglais) pour disposer d'une grande souplesse. Lorsque le SBC émetteur n'a reçu aucune réponse positive à sa requête de SBC destinataire et/ou que le terminal client destinataire n'est pas présent dans sa base de données, ce dernier peut alors transmettre la requête d'initiation d'appel à la passerelle de signalisation afin qu'elle relaie ce message vers le service extérieur adéquat pour être traitée.

On peut également prévoir que la passerelle de signalisation fait partie du groupe multicast G identifié par l'adresse IP spécifique. La passerelle a alors en charge de répondre positivement à toute requête de destinataire qu'elle reçoit, et qui concerne un domaine pour lequel elle assure un interfonctionnement.

Il convient de noter que, dans le cas où la passerelle de signalisation fait partie du groupe multicast G, il est préférable qu'elle ne réponde pas aux requêtes de mandataire. Toutefois, elle peut être adaptée pour émettre ce type de messages si elle-même perd l'accès à la plateforme de service.

Dans le cas où la plateforme de service n'est plus opérationnelle, tous les SBC détectent une perte d'accessibilité vers elle.

La figure 2 illustre une gestion d'une inaccessibilité de la plateforme de service depuis un contrôleur de session en bordure selon un mode de réalisation de la présente invention.

Le réseau 10 est similaire à celui illustré en figure 1.

Le SBC1 a basculé en mode de fonctionnement local, soit directement après détection de perte de la plateforme de service, soit encore après avoir envoyé une ou plusieurs requêtes de mandataire sans réponse.

Sur réception d'un message d'initiation d'appel 21 émis par le terminal client T1 à destination du terminal client T7, le SBC1 vérifie que le terminal client T7 n'est pas présent dans sa base de données, et envoie une requête de destinataire au groupe multicast G, pour déterminer auprès de quel SBC le terminal client T7 est géré. Le SBC3 répond positivement à cette requête, en indiquant ses propres informations de contact. Le SBC1 lui transmet le message d'initialisation d'appel 22 à destination du terminal client T7. Le SBC3 traite cette requête et la relaie à destination du terminal client T7 par un message 23. Le terminal client destinataire T7 répond alors au SBC3 par un message 24 de type '200 OK' selon le protocole SIP si l'établissement d'appel est géré selon ce protocole. Le SBC 3 transmet ensuite au SBC1 ce message 25, ce dernier traitant cette réponse et la relayant à destination du terminal client T1 sous la forme d'un message 26.

Puis, comme dans un cas classique, les échanges peuvent alors être mis en oeuvre selon un protocole de type RTP entre les terminaux clients T1 et T7, ces derniers n'ayant pas eu connaissance de la perte d'accès à la plateforme de service.

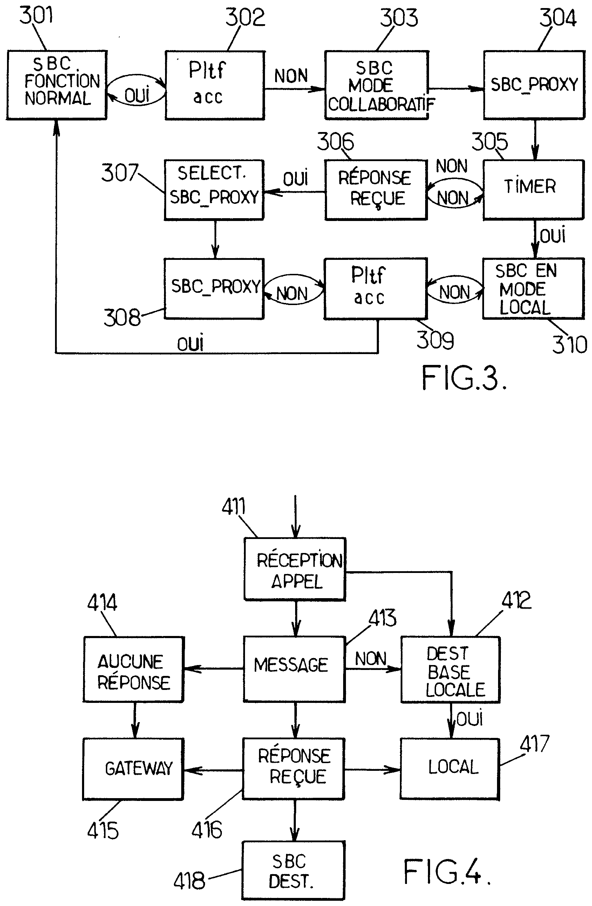

La figure 3 illustre une gestion des basculements entre des modes de fonctionnement différents selon un mode de réalisation de la présente invention.

Le SBC considéré opère en mode de fonctionnement normal à une étape 301. Puis, sur la base d'un mécanisme tel que décrit ci-avant, ce SBC contrôle régulièrement son état d'accessibilité de la plateforme de service à une étape 302. Si la plateforme est détectée comme accessible, le SBC reste dans le mode de fonctionnement normal 301.

Si la plateforme de service est détectée comme non accessible, le SBC bascule en mode de fonctionnement collaboratif à une étape 303. Puis, le SBC envoie une requête de mandataire 304 aux différents SBC du groupe de diffusion considéré en gérant un temporisateur associé comme décrit ci-avant.

Sur expiration du temporisateur, le SBC vérifie quels SBC de ce groupe ont répondu, à une étape 306.

Si aucune réponse des autres SBC n'est reçue à l'expiration du temporisateur, le SBC bascule en mode de fonctionnement local, à une étape 310.

En revanche si, à l'étape 306, une réponse est reçue au message de recherche de mandataire, le SBC émetteur sélectionne, à une étape 307, un SBC mandataire (noté SBC Proxy sur la figure) parmi les SBC qui ont répondu.

Puis, à une étape 308, le traitement de l'appel requis est effectué via le SBC mandataire sélectionné, c'est-à-dire que les messages reçus depuis un terminal client du SBC émetteur sont transmis à la plateforme de service par l'intermédiaire du SBC mandataire.

Lorsqu'à une étape 309, la plateforme de service est à nouveau détectée comme accessible depuis un SBC qui opère soit dans le mode de fonctionnement collaboratif, soit dans le mode de fonctionnement local, il est prévu que ce SBC bascule alors dans le mode de fonctionnement normal, de l'étape 301.

On peut prévoir de mettre en oeuvre le contrôle de l'accessibilité de la plateforme de service depuis un SBC régulièrement, voire même, à une fréquence déterminée.

La figure 4 illustre une gestion d'établissement d'appel dans un mode de fonctionnement local selon un mode de réalisation de la présente invention.

A une étape 411, un message d'initiation d'appel est reçu sur un SBC du réseau qui opère en mode de fonctionnement local. Dans ce mode de fonctionnement, le SBC maintient à jour sa base de données locale.

Sur réception d'une requête d'établissement d'appel depuis un terminal client de ce SBC à destination d'un terminal client destinataire, le SBC peut vérifier dans sa base de données locale, s'il est en charge du terminal client destinataire à l'étape 412. Si tel est le cas, le traitement de cet appel peut être effectué en local à ce SBC. En revanche, si ce n'est pas le cas, le SBC envoie une requête de SBC destinataire au groupe de SBC à une étape 413.

Dans une alternative, le SBC peut interroger directement les SBC distants avant de vérifier les données dans sa base de données locale, par l'envoi d'une requête de SBC destinataire au groupe de SBC concerné, et de ce fait ce SBC peut passer directement de l'étape 411 à l'étape 413.

Ensuite, le SBC peut recevoir une réponse à cette requête de SBC destinataire de la part d'au moins un SBC du groupe à une étape 416. Dans ce cas, le message d'initiation d'appel est transmis au SBC destinataire qui a répondu, pour traitement de la requête d'établissement d'appel à une étape 416 si le SBC qui a répondu est le SBC émetteur lui-même, à l'étape 418 s'il s'agit d'un SBC distinct.

On peut prévoir que, dans le cas où aucun SBC du groupe de diffusion de la requête de SBC destinataire ne répond, à une étape 414, le SBC émetteur émette cette requête à destination d'une passerelle de service. Si cette dernière répond à la requête de SBC destinataire, la requête d'établissement d'appel est transmise à cette passerelle de service pour traitement à une étape 415. Tel que décrit précédemment, la passerelle peut également faire partie des éléments du réseau sollicités à l'étape 413. Une réponse positive de sa part (à l'étape 416) conduira de la même manière à la transmission de la requête d'établissement d'appel à cette passerelle de service pour traitement à une étape 415

## Revendications

1. Procédé de gestion d'un service offert à un utilisateur d'un terminal dans un réseau (10) comprenant une plateforme de service (11) et des équipements incluant des contrôleurs de session en bordure (SBC1, SBC2, SBC3, SBC4), chacun des contrôleurs de session en bordure étant adapté pour communiquer avec la plateforme de service (11),
au moins un contrôleur de session en bordure donné étant adapté pour router des messages reçus depuis le terminal à destination de la plateforme de service ;
ledit procédé comprenant les étapes suivantes au niveau du contrôleur de session en bordure donné :
/a/ décider que la plateforme de service n'est pas accessible sur la base d'un contrôle d'accessibilité ; et
/b/ opérer dans un mode de fonctionnement autonome dans lequel le contrôleur de session en bordure donné sélectionne un équipement du réseau distinct de la plateforme de service et route au moins un message reçu depuis le terminal vers ledit équipement du réseau sélectionné,
dans lequel :
- si au moins un contrôleur de session en bordure a accès à la plateforme de service, ledit équipement de réseau sélectionné est un contrôleur de session en bordure ayant accès à la plateforme de service, le message routé vers ledit équipement de réseau sélectionné étant transmis depuis l'équipement de réseau sélectionné vers la plateforme de service ; et
- sinon, l'équipement de réseau sélectionné est un équipement en charge de gérer le terminal destinataire, le message routé vers ledit équipement de réseau sélectionné étant transmis depuis l'équipement de réseau sélectionné vers le terminal destinataire.

2. Procédé de gestion de service selon la revendication 1, dans lequel chaque contrôleur de session en bordure met en oeuvre le contrôle d'accessibilité à la plateforme, et
dans lequel, à l'étape /b/, les étapes suivantes sont effectuées :
/b-1/ émettre une requête de mandataire à destination d'au moins un autre contrôleur de session en bordure du réseau ;
/b-2/ si au moins une réponse à ladite requête de mandataire est reçue, sélectionner, en tant que mandataire, un contrôleur de session en bordure parmi les contrôleurs de session en bordure ayant émis une réponse.

3. Procédé de gestion selon la revendication 1, dans lequel, à l'étape /b/, le contrôleur de session en bordure reçoit un message du terminal à destination d'un terminal destinataire, et
ledit équipement de réseau sélectionné est un contrôleur de session en bordure ayant en charge de gérer ledit terminal destinataire ;
le message routé vers ledit équipement de réseau sélectionné étant transmis depuis l'équipement de réseau sélectionné vers le terminal destinataire.

4. Procédé de gestion de service selon la revendication 3, dans lequel chaque contrôleur de session en bordure maintient une base de données locale indiquant des terminaux que ledit contrôleur de session en bordure gère, et
dans lequel l'étape /b/ est effectuée selon les étapes suivantes, au niveau du contrôleur de session en bordure donné :
/b-i/ émettre un message de requête de destinataire à destination d'au moins un autre contrôleur de session en bordure ;
/b-ii/ si une réponse à la requête de destinataire est reçue, sélectionner le contrôleur de session en bordure ayant émis ladite réponse ;
un contrôleur de session en bordure décidant d'émettre une réponse à la requête de destinataire en fonction de la base de données locale.

5. Procédé de gestion selon la revendication 1, dans lequel, à l'étape /b/, le contrôleur de session en bordure reçoit un message du terminal à destination d'un terminal destinataire, et
ledit équipement de réseau sélectionné est une passerelle de service reliant ledit premier réseau (10) à un second réseau ayant en charge de gérer ledit terminal destinataire ;
le message routé vers ledit équipement de réseau sélectionné étant transmis depuis l'équipement de réseau sélectionné vers le terminal destinataire.

6. Procédé de gestion selon l'une quelconque des revendications précédentes, comprenant en outre, au niveau du contrôleur de session en bordure donné, les étapes suivantes :
- recevoir une requête de mandataire ;
- si la plateforme est détectée comme accessible, émettre une réponse à la requête de mandataire.

7. Procédé de gestion selon l'une quelconque des revendications précédentes, comprenant en outre, au niveau du contrôleur de session en bordure, les étapes suivantes :
- recevoir une requête de destinataire indiquant un terminal destinataire ;
- déterminer si ledit contrôleur de session est en charge de gérer le terminal destinataire en fonction d'informations stockées dans la base de données locale ;
- dans l'affirmative, émettre une réponse à la requête de destinataire ;
le contrôleur de session en bordure étant adapté pour transmettre, à destination du terminal destinataire, des messages reçus depuis un autre contrôleur de session en bordure.

8. Procédé de gestion d'un service selon l'une quelconque des revendications précédentes, dans lequel le contrôle d'accessibilité de la plateforme est mis en oeuvre selon les étapes suivantes, au niveau du contrôleur de session en bordure :
/1/ émettre un message de contrôle à destination de la plateforme de service et déclencher un temporisateur ;
/2/ contrôler si une réponse au message de contrôle est reçue depuis la plateforme de service avant expiration dudit temporisateur ;
/3/ répéter les étapes /1/ et /2/ N fois, N étant un nombre entier prédéterminé ;
/4/ si aucune réponse n'est reçue avant expiration du temporisateur pour les N fois, décider que la plateforme de service n'est pas accessible.

9. Contrôleur de session en bordure adapté pour être disposé dans un réseau (10) offrant un service à un utilisateur d'un terminal, ledit réseau (10) comprenant une plateforme de service (11) et d'autres contrôleurs de session en bordure (SBC1, SBC2, SBC3, SBC4),
chacun des contrôleurs de session en bordure étant adapté pour communiquer avec la plateforme de service (11),
ledit contrôleur de session en bordure étant adapté pour transmettre des messages reçus depuis le terminal à destination de la plateforme de service et comprenant :
- une unité de contrôle adaptée pour décider que la plateforme de service n'est pas accessible sur la base d'un contrôle d'accessibilité ; et
- une unité de gestion de mode de fonctionnement adaptée pour basculer dans un mode de fonctionnement autonome, en fonction d'une décision prise par l'unité de contrôle, dans lequel le contrôleur de session en bordure sélectionne un équipement du réseau distinct de la plateforme et route au moins un message reçu depuis le terminal vers ledit équipement du réseau sélectionné,
dans lequel :
- si au moins un contrôleur de session en bordure a accès à la plateforme de service, ledit équipement de réseau sélectionné est un contrôleur de session en bordure ayant accès à la plateforme de service, le message routé vers ledit équipement de réseau sélectionné étant transmis depuis l'équipement de réseau sélectionné vers la plateforme de service ; et
- sinon, l'équipement de réseau sélectionné est un équipement en charge de gérer le terminal destinataire, le message routé vers ledit équipement de réseau sélectionné étant transmis depuis l'équipement de réseau sélectionné vers le terminal destinataire.

10. Programme d'ordinateur comprenant des instructions de code de programme pour la mise en oeuvre du procédé selon la revendication 1.

11. Support d'enregistrement lisible par un ordinateur sur lequel est enregistré le programme d'ordinateur selon la revendication 10.

## Patentansprüche

1. Verfahren zur Verwaltung eines Services, der einem Nutzer eines Endgeräts in einem Netzwerk (10) angeboten wird, das eine Serviceplattform (11) und Komponenten, einschließlich von Sitzungsgrenzen-Controllern (SBC1, SBC2, SBC3, SBC4) umfasst, wobei jeder der Sitzungsgrenzen-Controller geeignet ist, mit der Serviceplattform (11) zu kommunizieren,
wobei zumindest ein bestimmter Sitzungsgrenzen-Controller geeignet ist, von dem Endgerät eingegangene Nachrichten an die Serviceplattform zu routen,
wobei das Verfahren in Bezug auf den bestimmten Sitzungsgrenzen-Controller die folgenden Schritte umfasst:
/a/ auf Grundlage einer Zugangskontrolle entscheiden, dass ein Zugang zu der Serviceplattform nicht möglich ist und
/b/ in einer autonomen Betriebsart arbeiten, bei der der bestimmte Sitzungsgrenzen-Controller eine von der Serviceplattform verschiedene Netzwerkkomponente auswählt und zumindest eine von dem Endgerät eingegangene Nachricht zu der ausgewählten Netzwerkkomponente routet,
bei dem:
- falls zumindest ein Sitzungsgrenzen-Controller zu der Serviceplattform Zugang hat, die ausgewählte Netzwerkkomponente ein Sitzungsgrenzen-Controller ist, der zu der Serviceplattform Zugang hat, wobei die zu der ausgewählten Netzwerkkomponente geroutete Nachricht von der ausgewählten Netzwerkkomponente zu der Serviceplattform übermittelt wird; und
- ansonsten die ausgewählte Netzwerkkomponente eine Komponente ist, die für die Verwaltung des Ziel-Endgeräts verantwortlich ist, wobei die zu der ausgewählten Netzwerkkomponente geroutete Nachricht von der ausgewählten Netzwerkkomponente zu dem Ziel-Endgerät übermittelt wird.

2. Serviceverwaltungsverfahren nach Anspruch 1, bei dem jeder Sitzungsgrenzen-Controller die Kontrolle des Zugangs zu der Plattform durchführt, und
bei dem im Schritt /b/ die folgenden Schritte durchgeführt werden:
/b-1/ einen Antrag auf Zustellung an zumindest einen anderen Sitzungsgrenzen-Controller des Netzwerks verschicken;
/b-2/ falls zumindest eine Antwort auf den Antrag auf Zustellung empfangen wurde, unter den Sitzungsgrenzen-Controllern, die eine Antwort verschickt haben, einen Sitzungsgrenzen-Controller als Proxy auswählen.

3. Verwaltungsverfahren nach Anspruch 1, bei dem im Schritt /b/ der Sitzungsgrenzen-Controller eine Nachricht des Endgeräts an ein Ziel-Endgerät empfängt, und
die ausgewählte Netzwerkkomponente ein Sitzungsgrenzen-Controller ist, der für die Verwaltung des Ziel-Endgeräts verantwortlich ist;
wobei die zu der ausgewählten Netzwerkkomponente geroutete Nachricht, von der ausgewählten Netzwerkkomponente zu dem Ziel-Endgerät übermittelt wird.

4. Serviceverwaltungsverfahren nach Anspruch 3, bei dem jeder Sitzungsgrenzen-Controller eine lokale Datenbank pflegt, in der die von dem Sitzungsgrenzen-Controller verwalteten Endgeräte angegeben sind, und
bei dem der Schritt /b/ in Bezug auf den bestimmten Sitzungsgrenzen-Controller gemäß den folgenden Schritten ausgeführt wird:
/b-i/ eine Zielanfrage-Nachricht an zumindest einen anderen Sitzungsgrenzen-Controller verschicken;
/b-i/ falls eine Antwort auf die Zielanfrage empfangen wurde, unter den Sitzungsgrenzen-Controllern, denjenigen der die Antwort verschickte, auswählen;
wobei ein Sitzungsgrenzen-Controller anhand der lokalen Datenbank darüber entscheidet, ob er auf die Zielanfrage eine Antwort verschickt.

5. Verwaltungsverfahren nach Anspruch 1, bei dem im Schritt /b/ der Sitzungsgrenzen-Controller eine Nachricht des Endgeräts an das Ziel-Endgerät empfängt, und
es sich bei der ausgewählten Netzwerkkomponente um ein Netzanpassungsgerät handelt, das das erste Netzwerk (10) mit einem zweiten Netzwerk verbindet, das für die Verwaltung des Ziel-Endgeräts verantwortlich ist;
wobei die zu der ausgewählten Netzwerkkomponente geroutete Nachricht, von der ausgewählten Netzwerkkomponente an das Ziel-Endgerät übermittelt wird.

6. Verwaltungsverfahren nach einem der vorangehenden Ansprüche, welches unter anderem in Bezug auf den bestimmten Sitzungsgrenzen-Controller die folgenden Schritte umfasst:
- einen Antrag auf Zustellung empfangen;
- falls ermittelt wird, dass ein Zugang zu der Plattform möglich ist, verschicken einer Antwort auf den Antrag auf Zustellung.

7. Verwaltungsverfahren nach einem der vorangehenden Ansprüche, welches unter anderem in Bezug auf den Sitzungsgrenzen-Controller die folgenden Schritte umfasst:
- eine ein Ziel-Endgerät angebende Zielanfrage empfangen;
- anhand der in der lokalen Datenbank gespeicherten Informationen ermitteln, ob der Sitzungs-Controller für die Verwaltung des Ziel-Endgeräts verantwortlich ist;
- ist dies der Fall, eine Antwort auf die Zielanfrage verschicken;
wobei der Sitzungsgrenzen-Controller geeignet ist, Nachrichten an das Ziel-Endgerät zu übermitteln, die von einem anderen Sitzungsgrenzen-Controller eingingen.

8. Verwaltungsverfahren eines Services nach einem der vorangehenden Ansprüche, bei dem die Kontrolle des Zugangs zu der Plattform in Bezug auf den Sitzungsgrenzen-Controller gemäß einem der folgenden Schritte durchgeführt wird:
/1/ eine Kontrollnachricht an die Serviceplattform verschicken und einen Zeitgeber auslösen;
/2/ kontrollieren, ob vor dem Erlöschen des Zeitgebers eine Antwort auf die Kontrollnachricht von der Serviceplattform einging;
/3/ Schritte /1/ und /2/ N-mal wiederholen, wobei N eine vorbestimmte Zahl ist;
/4/ wird vor dem N-maligen Erlöschen des Zeitgebers keine Antwort empfangen, entscheiden, dass kein Zugang zu der Serviceplattform möglich ist.

9. Sitzungsgrenzen-Controller, der geeignet ist, in einem Netzwerk (10) angeordnet zu sein, das einem Nutzer eines Endgeräts einen Service anbietet, wobei das Netzwerk (10) eine Serviceplattform (11) und weitere Sitzungsgrenzen-Controller (SBC1, SBC2, SBC3, SBC4) umfasst,
wobei jeder der Sitzungsgrenzen-Controller geeignet ist, mit der Serviceplattform (11) zu kommunizieren,
wobei der Sitzungsgrenzen-Controller geeignet ist, von dem Endgerät eingegangene Nachrichten an die Serviceplattform zu routen, und Folgendes umfasst:
- eine Steuereinheit, die geeignet ist, auf Grundlage einer Zugangskontrolle zu entscheiden, dass ein Zugang zu der Serviceplattform nicht möglich ist; und
- eine Betriebsart-Verwaltungseinheit, die geeignet ist, abhängig von der durch die Steuereinheit gefällten Entscheidung in eine autonome Betriebsart umzuschalten, bei der der Sitzungsgrenzen-Controller eine von der Plattform verschiedene Netzwerkkomponente auswählt und zumindest eine von dem Endgerät eingegangene Nachricht zu der ausgewählten Netzwerkkomponente routet,
bei dem:
- falls zumindest ein Sitzungsgrenzen-Controller zu der Serviceplattform Zugang hat, die ausgewählte Netzwerkkomponente ein Sitzungsgrenzen-Controller ist, der zu der Serviceplattform Zugang hat, wobei die zu der ausgewählten Netzwerkkomponente geroutete Nachricht von der ausgewählten Netzwerkkomponente zu der Serviceplattform übermittelt wird; und
- ansonsten die ausgewählte Netzwerkkomponente eine Komponente ist, die für die Verwaltung des Ziel-Endgeräts verantwortlich ist, wobei die zu der ausgewählten Netzwerkkomponente geroutete Nachricht von der ausgewählten Netzwerkkomponente zu dem Ziel-Endgerät übermittelt wird.

10. Computerprogramm, das Programmcodeanweisungen zur Durchführung des Verfahrens nach Anspruch 1 umfasst.

11. Computerlesbares Aufzeichnungsmedium, auf dem das Computerprogramm nach Anspruch 10 gespeichert ist.

## Claims

1. A method of managing a service offered to a user of a terminal in a network (10) comprising a service platform (11) and equipment including session border controllers (SBC1, SBC2, SBC3, SBC4) that each are adapted to communicate with the service platform (11),
at least one given session border controller being adapted to route messages received from the terminal, to the service platform,
said method comprising the following steps at the level of the given session border controller:
/a/ deciding that the service platform is not accessible on the basis of an accessibility check; and
/b/ operating in an autonomous operating mode in which the given session border controller selects an equipment of the network separate from the service platform and routes at least one message received from the terminal to said selected network equipment, in which:
- if at least one session border controller has access to the service platform, said selected network equipment is a session border controller having access to the service platform, the message routed to said selected network equipment being transmitted from the selected network equipment to the service platform; and,
- otherwise, the selected network equipment is an equipment in charge of managing the destination terminal of said message, the message routed to said selected network equipment being transmitted from the selected network equipment to said destination terminal.

2. A method of managing a service according to claim 1, in which each session border controller implements the platform accessibility check and,
in which in step /b/, the following steps are carried out:
/b-1/ transmitting a proxy request to at least one other session border controller of the network;
/b-2/ if at least one response to said proxy request is received, selecting, as a proxy, a session border controller from the session border controllers having sent a response.

3. A method of managing a service according to claim 1, in which, in step /b/, the session border controller receives a message from the terminal intended for a destination terminal, and
said selected network equipment is a session border controller in charge of managing said destination terminal;
the message routed to said selected network equipment being transmitted from the selected network equipment to the destination terminal.

4. A method of managing a service according to claim 3, in which each session border controller maintains a local database indicating terminals that said session border controller manages, and
in which step /b/ is carried out according to the following steps, at the level of the given session border controller:
/b-i/ transmitting a destination request message to at least one other session border controller;
/b-ii/ if a response to the destination request is received, selecting the session border controller having sent said response;
a session border controller deciding to transmit a response to the destination request according to the local database.

5. A method of managing a service according to claim 1, in which, in step /b/, the session border controller receives a message from the terminal intended for a destination terminal, and
said selected network equipment is a service gateway connecting said first network to a second network in charge of managing said destination terminal;
the message routed to said selected network equipment being transmitted from the selected network equipment to the destination terminal.

6. A management method according to any of the preceding claims, comprising moreover, at the level of the given session border controller, the following steps:
- receiving a proxy request;
- if the platform is detected as accessible, transmitting a response to the proxy request.

7. A management method according to any of the preceding claims, comprising moreover, at the level of the session border controller, the following steps:
- receiving a destination request indicating a destination terminal;
- determining if said session controller is in charge of managing the destination terminal according to information stored in the local database;
- and, in the affirmative, transmitting a response to the destination request;
the session border controller being adapted for transmitting, to the destination terminal, messages received from another session border controller.

8. A method of managing a service according to any of the preceding claims, in which the platform accessibility check is implemented according to the following steps, at the level of the session border controller:
/1/ transmitting a check message to the service platform and starting a timer;
/2/ checking if a response to the check message is received from the service platform before said timer elapses;
/3/ repeating steps /1/ and /2/ N times, N being a predetermined integer;
/4/ if no response is received before the timer elapses for the N times, deciding that the service platform is not accessible.

9. A session border controller in a network offering a service to a user of a terminal, said network (10) comprising a service platform (11) and other session border controllers (SBC1, SBC2, SBC3, SBC4),
each session border controller being adapted for communicating with the service platform (11),
said session border controller being adapted for transmitting messages received from the terminal to the service platform and comprising:
- a control unit adapted to decide that the service platform is not accessible on the basis of an accessibility check; and
- an operating mode management unit adapted for switching into an autonomous operating mode, according to a decision taken by the control unit, in which the session border controller selects an equipment of the network separate from the platform and routes at least one message received from the terminal to said selected equipment of the network, in which:
- if at least one session border controller has access to the service platform, said selected network equipment is a session border controller having access to the service platform, the message routed to said selected network equipment being transmitted from the selected network equipment to the service platform; and
- otherwise, the selected network equipment in an equipment in charge of managing the destination terminal, the message routed to said selected network equipment being transmitted from the selected network equipment to a destination terminal.

10. A computer program comprising program code instructions for the implementation of the method according to claim 1.

11. A storage medium, which can be read by a computer, on which the computer program according to claim 10 is stored.
